Europäisches Patentamt

European Patent Office

Office européen des brevets

(11) Veröffentlichungsnummer: **0 308 567**
**A1**

## (12) EUROPÄISCHE PATENTANMELDUNG

(21) Anmeldenummer: **87810547.7**

(22) Anmeldetag: **22.09.87**

(51) Int. Cl.⁴ **F24J 3/00** , **F22B 3/06** , **B01D 1/00**

(43) Veröffentlichungstag der Anmeldung:
**29.03.89 Patentblatt 89/13**

(84) Benannte Vertragsstaaten:
**BE CH DE ES FR GB IT LI NL SE**

(71) Anmelder: **Croymec AG**
**Binningerstrasse 85**
**CH-4123 Allschwil(CH)**

(72) Erfinder: **Tornare, Jean-Elie**
**Haupstrasse 41**
**CH-4422 Arisdorf(CH)**
Erfinder: **Bofinger, Klaus**
**Fuchsmattstrasse 13**
**CH-4107 Ettingen(CH)**

(74) Vertreter: **Feldmann, Clarence Paul et al**
**c/o Patentanwaltsbüro FELDMANN AG**
**Postfach Kanalstrasse 17**
**CH-8152 Glattbrugg(CH)**

(54) **Vorrichtung zum Verdampfen eines cryogenen Fluidums.**

(57) Die Vorrichtung arbeitet mit einem Verbrennungsmotor (1) und nutzt dessen Verbrennungswärme. Neben der Wärme des aus dem Motor (1) austretenden Kühlwassers wird auch jene der Abgase in einem Abgas-Wärmetauscher (4) auf einen Wasserkreislauf übertragen. Die mechanische Leistung des Motors (1) wird durch direkten Antrieb einer Wasserbremse (14) nahezu vollständig in Wärmeleistung umgewandelt und die so erzeugte Wärme ebenfalls dem Wasserkreislauf zugeführt. Das erhitzte Wasser wird durch einen Verdampfer (7) geführt, wo es das in einer Rohrschlange (25) oder in einem Rohrbündel geführte cryogene Fluidum zum Verdampfen bringt.

FIG. 1

EP 0 308 567 A1

## VORRICHTUNG ZUM VERDAMPFEN EINES CRYOGENEN FLUIDUMS

Die vorliegende Erfindung betrifft eine Vorrichtung, um einem cryogenen Fluidum Wärme zuzuführen, sodass es damit zum Verdampfen gebracht wird. Es sind Systeme bekannt, welche solche Fluida auf eine bestimmte Temperatur aufheizen und gleichzeitig auch pumpen. Eine verbreitete Aufgabe solcher Systeme ist es etwa, Stickstoff von flüssigem in gasförmigen Zustand zu versetzen, um Stickstoffgas für verschiedene Verwendungszwecke bereitzustellen. Der verdampfte Stickstoff wird zum Beispiel dazu verwendet, um in Oelbohrlöcher eingedrungenes Wasser von dort herauszuspülen oder Oel- und Erdgasgesteinsschichten auszubrechen. Weitere Anwendungen sind zum Beispiel das Spülen von Tanks in Tankschiffen oder das Reinigen und Druckproben von Pipelines mittels Stickstoffgas unter hohem Druck. Auch Rohrleitungen von Chemieanlagen werden mit Stickstoffgas gereinigt, indem man vom Gas Sand durch die Rohre blasen lässt. Diese Methode wird in Fachkreisen SANJET genannt. Des weiteren wird natürlich auch Stickstoffgas gebraucht, um es in Druckluftflaschen abfüllen zu können.

Viele Systeme arbeiten mit Brennern, um die erforderliche Verdampfungswärme zu erzeugen. Brenner können jedoch nicht überall eingesetzt werden. Muss die Verdampferanlage zum Beispiel an einem Ort betrieben werden, wo infolge der Anwesenheit gewisser Stoffe in der Umgebung eine akute Feuer- oder gar Explosionsgefahr besteht, kann selbstverständlich nicht mit einem Brenner, speziell nicht mit einem offenen, gearbeitet werden. In solchen Fällen werden Verbrennungsmotoren zur Wärmeerzeugung eingesetzt. Müssen bloss kleinere Mengen von Flüssigkeiten verdampft werden, so begnügt man sich in der Regel mit der Nutzung der Abwärme eines solchen Motors. Man überträgt die anfallende Verbrennungswärme mittels des Wassers des motoreigenen Kühlkreislaufes. Dieses Kühlwasser wird hierzu in einen Verdampfer geleitet, durch den das cryogene Fluidum fliesst. Im Verdampfer fliesst dann die Wärme vom Wasser auf das Fluidum und erhöht so dessen Temperatur, sodass es verdampft. Das Wasser wird in der Folge entsprechend abgekühlt und fliesst zurück zum Verbrennungsmotor, wo es erneut Wärme aufnimmt und so seine Funktion als Kühlmittel erfüllt. Zusätzlich kann auch die in den Abgasen vorhandene Wärme genutzt werden. Hierzu können die Abgase direkt den Verdampfer durchströmen, indem der Auspuff als Rohrschlange durch den Verdampfer geführt ist. In einer anderen Ausführung wird die Auspuffwärme an das Kühlwasser abgegeben, das vom Motor her kommt. Zu diesem Zweck kann das Kühlwasser das Auspuffrohr direkt umströmen. Sollen nun aber grössere Mengen von cryogenen Fluida verdampft werden, so sind beträchtliche Wärmemengen hiezu erforderlich. Es wäre für diesen Fall unwirtschaftlich, bloss die Abwärme des Verbrennungsmotors zu nutzen, nicht aber seine mechanische Leistung, welche ja etwa einen Drittel seiner Energiebilanz ausmacht. Die zu lösende Aufgabe besteht also darin, die anfallende Wellenleistung eines Verbrennungsmotors möglichst restlos in nutzbare Wärmeenergie umzuwandeln. In einem bekannten System wird die Wellenleistung des Verbrennungsmotors bereits genutzt, jedoch nicht nur zum Verdampfen, sondern hauptsächlich zum Pumpen des zu verdampfenden cryogenen Fluidums. Der Verbrennungsmotor treibt mit seiner Abtriebswelle eine Hydraulikpumpe an. Das von dieser geförderte Oel wiederum treibt kraft seines Druckes einen Hydraulikmotor an, mittels dem eine Flüssigkeitspumpe angetrieben wird, die das Fluidum durch dem Verdampfer pumpt. Gleichzeitig wird die am Hydrauliksystem anfallende Wärme genutzt, indem sie in einen Wasserkreislauf übertragen wird und von dort über den Verdampfer an das Fluidum abgegeben wird. Der Nachteil dieses Systems ist vorallem darin zu sehen, dass es im Aufbau recht kompliziert ist. Es versteht sich, dass dies die Kosten einer entsprechenden Anlage verteuert. Weiter ist die Steuerung dieses Systems relativ schwierig, sind doch eine grosse Anzahl von Parametern vorhanden. Neben der Leistung des Verbrennungsmotors kann jene des Hydraulikmotors, der Hydraulikpumpe sowie der Flüssigkeitspumpe variabel sein. All diese Leistungen müssen so aufeinander abgestimmt sein, dass die nutzbare Abwärme des Verbrennungsmotors jeweils ausreicht, um die durch die Flüssigkeitspumpe geförderte Menge des cryogenen Fluidums zu verdampfen. Ausserdem ist ein spezieller Zwischen-Wärmetauscher erforderlich, um die im Oel gespeicherte Wärme ins Wasser zu übertragen. Dieser Wärmetauscher wirkt sich natürlich negativ auf den Wirkungsgrad der Anlage aus.

Die vorliegende Erfindung stellt sich daher die Aufgabe, eine Vorrichtung zum Verdampfen eines cryogenen Fluidums zu schaffen, welche mit einfachsten Mitteln eine möglichst hohe Verdampfungsleistung mit Hilfe eines Verbrennungsmotors erzielt und deren Verdampfungsleistung möglichst einfach und mit viel weniger materiellem Aufwand regelbar ist.

Die Erfindung löst diese Aufgabe mit einer Vorrichtung zum Verdampfen eines cryogenen Fluidums mit einem Verbrennungsmotor, dessen Abwärme aus dem Kühlwasser und den Abgasen über einen Wasserkreislauf mindestens teilweise an einen Verdampfer abgebbar ist, die sich dadurch auszeichnet, dass eine Wasserbremse in Form eines Wasserwirbel-Bremsverzögerers vorhanden ist, die von der Abtriebsachse des Verbrennungsmotors antreibbar ist, und dass diese Wasserbremse zusammen mit mindestens dem Verdampfer einen geschlossenen Kühlkreislauf für das die in der Wasserbremse erzeugte Wärme zu übertragende Wasser bildet.

In der Zeichnung ist eine beispielsweise Anordnung der Komponenten einer erfindungsgemässen Vorrichtung schematisch dargestellt.

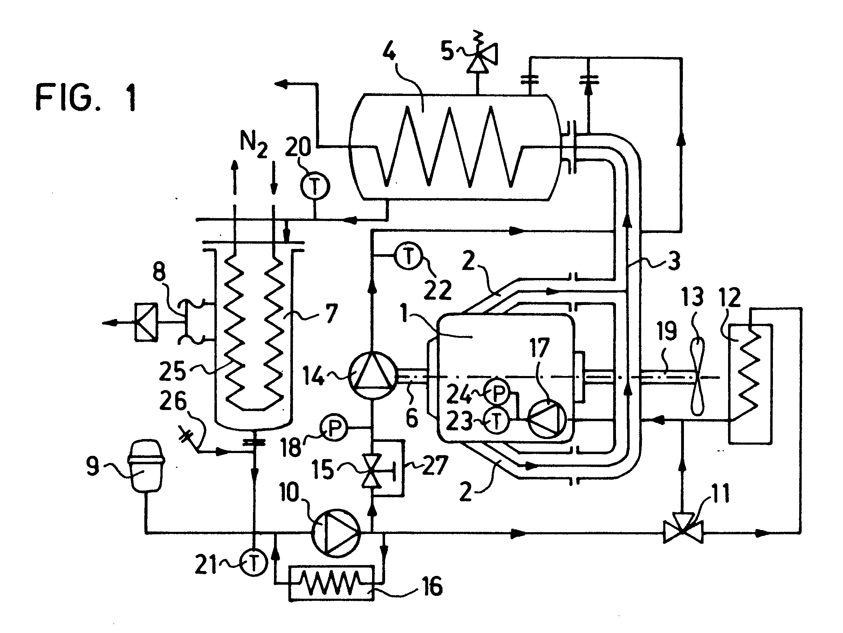

Figur 1 zeigt die Vorrichtung schematisch.

Nachfolgend wird die Erfindung anhand des gezeigten Schemas eingehender beschrieben und deren Funktion erläutert.

Der zentrale Bestandteil der Erfindung ist die Wasserbremse 14. Diese Wasserbremse 14 ist ein handelsüblicher sogenannter Wasserwirbel-Bremsverzögerer. Sie besteht im wesentlichen aus einem Gehäuse, das in der Regel aus zwei symmetrischen Gehäuseschalen aufgebaut ist. In speziell ausgeformten Freiräumen im Inneren des zusammengesetzten Gehäuses ist ein oder sind mehrere Schaufelräder drehbar angeordnet. Die Schaufelräder laufen auf einer gemeinsamen Achse, welche beidseits im Gehäuse gelagert ist. Da die Schaufeln der Schaufelräder relativ knapp an den inneren Gehäusewandungen entlangstreichen, entstehen bei einer Durchströmung des Gehäuses im durchströmenden Wasser beträchtliche Verwirbelungen. Diese erzeugen einen starken dynamischen Widerstand für die in der Wasserbremse drehenden Schaufelräder. Die mechanische Wellenleistung an den Schaufelräder-Wellen wird infolge dieses Widerstandes nahezu vollständig in Wärmeleistung umgewandelt, welche zur Nutzung weiterverwendet werden kann. Die Wasserbremse 14 wird erfindungsgemäss direkt von der Abtriebswelle 6 des Verbrennungsmotors 1 angetrieben. Beim Verbrennungsmotor 1 kann es sich um einen Benzin-, Gas- oder vorteilhafter um einen Dieselmotor handeln. Gerade wenn der Motor ja in der Umgebung von explosiven Gasen betrieben werden muss, fällt die Wahl zwingend auf einen Dieselmotor, da bei ihm keine Zündfunken anfallen, welche das ihn umgebende Gas zur Explosion bringen könnten. Mit Hilfe der direkt an den Motorblock angeflanschten Wasserbremse 14 kann dessen mechanische Leistung wie beschrieben fast vollständig und ohne Zwischen-Wärmetauscher in nutzbare Wärmeleistung übergeführt werden. Die so erzeugte Wärme macht in etwa einen Drittel der Energiebilanz des Verbrennungsmotors aus. Sie wird vom Wasser, das die Wasserbremse durchströmt, abgeführt und fliesst mit der Wärme vom aus dem Motor austretenden Kühlwasser zusammen. Dieses Kühlwasser hat ja vorher im Inneren des Motorblocks den grössten Teil der Verbrennungswärme des Motors aufgenommen. Ein wassergekühlter Verbrennungsmotor weist einen solchen internen Kühlkreislauf ohnehin auf. Das Wasser wird in diesem Kreislauf mittels einer motoreigenen Wasserpumpe 17 umgewälzt. Nachdem die Wärme aus der Wasserbremse 14 und jene aus dem Kühlwasser des Motors 1 zusammengeführt sind, fliesst das als Wärmeträger wirkende Wasser weiter durch einen Abgas-Wärmetauscher 4. In diesem wird die Wärme der Abgase so weit als möglich auf das ihn durchströmende Wasser übertragen. Hierzu kann der Wärmetauscher 4 so aufgebaut sein, dass in seinem Innern das Rohr, welches das Wasser führt, schlangenförmig, oder in Rohrbündel verzweigt, verläuft und diese Rohrschlange oder dieses Rohrbündel sodann von den heissen Abgasen umströmt wird. In der hier gezeigten Ausführung jedoch umströmt das Wasser das Auspuffrohr, welches als Rohrschlange oder Rohrbündel ausgebildet ist. Dieses Umströmen erfolgt hier sogar schon, bevor das oder die Rohre mit dem Kühlwasser bzw. den Auspuffgasen überhaupt den Abgas-Wärmetauscher erreicht haben. Die Auspuffrohre 3 mit dem heissen Verbrennungsgasen sind nämlich von allem Anfang an in das Innere der Rohre 2 verlegt, dort nämlich, wo die Abgase aus den Zylindern austreten und mit Sammelrohren in ein einzelnes Auspuffrohr 3 zusammengeführt werden. Bei der ganzen Wärmeführung der erfindungsgemässen Vorrichtung muss natürlich, sobald mehrere Wärmequellen zusammengekoppelt werden, darauf geachtet werden, dass die Wärme nur immer vom Orte höherer zum Orte tieferer Temperatur strömt. Diesem Gesetz wird durch die vorliegende Anordnung Rechnung getragen. Das heisst, die Abgase im Inneren des Abgas-Wärmetauschers 4 weisen eine immer noch höhere Temperatur auf als das bisher durch die Motorkühlung und die Bremsleistung der Wasserbremse 14 erwärmte Wasser. Der Abgas-Wärmetauscher 4 ist mit einem Sicherheitsventil 5 ausgerüstet. Für den Fall, dass das Wasser in Bereiche oberhalb seiner Dampfdruckkurve erhitzt wird und sich im Inneren des Wärmetauschers 4 gefährliche Ueberdrucke bilden, welche gar ein Bersten des Kessels bewirken könnten, öffnet sich dieses druckgesteuerte Ventil 5 automatisch und baut so allfälligen Ueberdruck im AbgasWärmetauscher 4 ab, sobald eine einstellbaren Druckhöhe überschritten wird. Nach Austritt des Wassers aus dem Abgas-Wärmetauscher 4 ist auf der entsprechenden Wasserleitung ein Thermometer 20 montiert, mittels dem laufend die Temperatur und somit im Vergleich mit der entsprechend der Pumpleistung geförderten Wassermenge auch die Wärmeleistung gemessen werden kann. Das erhitzte Wasser wird dann in den Verdampfer 7 geleitet. In diesem Verdampfer 7 wird das cryogene Fluidum, zum Beispiel Stickstoff, durch eine Rohrschlange 25 oder ein Rohrbündel geführt. Diese Rohrschlange 25 oder dieses Rohrbündel wird allseits vom erhitzten Wasser umströmt, wodurch die im Wasser gespeicherte Wärme über die Wandungen der Rohre auf das Fluidum fliesst. Dieses wird dadurch derart erwärmt, dass es verdampft und schliesslich in gasförmigem Zustand den Verdampfer 7 verlässt. Der Verdampfer 7 ist mit einer Ueberdrucksicherung in Form einer Soll-Bruchscheibe 8 ausgerüstet. Das von der Rohrschlange 25 oder dem Rohrbündel entsprechend abgekühlte Wasser verlässt schliesslich den Verdampfer 7 wieder und seine Temperatur lässt sich mittels eines weiteren Thermometers 21 überwachen. Die Temperaturdifferenz zwischen den beiden Thermometern 20 und 21 ergibt zusammen mit der geförderten Wassermenge Aufschluss über die im Verdampfer 7 übertragene Wärmemenge. Im Anschluss an den Verdampfer 7 ist ein Anschluss 26 in die Wasserleitung montiert, über welchen dem Kreislauf Wasser zugeführt werden kann. Dies ist sowohl für die erste Inbetriebnahme wie auch zur Kompensation allfälliger Leckverluste erforderlich. Des weiteren ist ein Expansionsgefäss 9 an die Wasserleitung angeschlossen. Vom Thermometer 21 weg wird das Wasser durch eine Pumpe 10 geführt, welche einen gewünschten Durchfluss im ganzen Kreislauf, hauptsächlich zwischen Wasserbremse 14, Abgas-Wärmetauscher 4 und Verdampfer 7 aufrechterhält. Eine solche Wasserpumpe 10 kann mechanisch ebenfalls von der Abtriebswelle 6 des Verbrennungsmotors 1 oder von einem eigenen Motor angetrieben sein. Das aus ihr austretende, kühle Wasser kann mit einem Anteil zur Kühlung des zur Wasserpumpe 10 gehörigen Oelkühlers 16 verwendet werden, wonach es wieder vor der Wasserpumpe 10 in die in jene hineinführende Wasserleitung hineingeführt wird. Nach dem Verlassen der Wasserpumpe 10 steht das Wasser unter einem Druck von mindestens 4 bar. Die Wasserleitung verzweigt sich hier. Eine führt über ein Ventil 15 zur Wasserbremse 14. Von jener ist ein Mamometer 18 an die Wasserleitung angeschlossen. An ihm lässt sich der erforderliche Mindestdruck zum Betrieb der Wasserbremse 14 überwachen. Ueber das Ventil 15, welches der Wasserbremse 14 vor- oder nachgeschaltet sein kann lässt sich die Wärmeleistung der Wasserbremse 14 steuern, indem die Durchflussmenge variiert wird. Bei Durchflussmenge Null ist auch die Wärmeleistung Null. Sie steigt mit entsprechend steigender Durchflussmenge. Diese wird typischerweise zwischen Null und einigen m3 pro Stunde liegen. Das Ventil 15 ist durch eine dünne Rohrleitung 27 permanent überbrückt. Damit wird sichergestellt, dass die Wasserbremse 14 niemals trocken läuft. Ein solcher Betrieb wurde deren Gleitringdichtungen nämlich zerstören. Nach der Wasserbremse 14 dient ein weiteres Thermometer 22 zur Ueberwachung der Brems- bzw. Wärmeleistung der Wasserbremse 14. Danach fliesst das Wasser weiter und wird zusammen mit dem Kühlwasser vom Motor her durch den Abgas-Wärmetauscher 4 geführt wie das schon weiter oben beschrieben wurde. Der andere Anteil des Wassers geht von der Verzweigung nach der Wasserpumpe 10 zu einem als Thermostaten ausgebildeten Dreiwegventil 11. Je nach Temperatur fliesst es von dort durch den Radiator 12, oder wenn es genügend kühl ist unter Kurzschliessung des Radiators 12 direkt in den Motorblock, wo es erneut Verbrennungswärme vom Motor 1 aufnimmt. Der Radiator 12 wird von Umgebungsluft umströmt, was vom Ventilator 13, welcher von der gegenseitigen Abtriebswelle 19 des Motors 1 angetrieben ist, unterstützt wird. Die ungefähre Durchflussmenge im Kühlsystem des Motors 1 erreicht etwa das 5-fache der maximalen Durchflussmenge der Wasserbremse 14. Alle diese Grössenverhältnisse werden massgeblich von den Energiebilanzen in den einzelnen Bestandteilen bestimmt. Auch am Kühlkreislauf des Motors 1 ist zur Ueberwachung der Betriebsbedingungen ein Thermometer 23 wie auch ein Manometer 24 angeschlossen. Selbstverständlich ist es auch denkbar, einen separaten Kreislauf zu bauen, der einzig die Wasserbremse 14 mit dem Verdampfer 7 und der Pumpe 10 verbindet. Weiter kann auch wahlweise das Wasser zum Beispiel parallel durch den Motorblock und/oder durch den Abgas-Wärmetauscher gepumpt werden oder eine dieser beiden Komponenten in Serie zur Wasserbremse 14 geschaltet werden. Die erfindungsgemässe Vorrichtung erlaubt es, bis zu etwa 90 % der gesamten Verbrennungswärme des Motors in nutzbare Heizwärme umzuwandeln. Die Steuerung der Wärmeleistung im ganzen Leistungsbereich der Wasserbremse erfolgt in einfachster Weise über das Ventil 15, da im Normalbetrieb der Motor bei einer festen Drehzahl laufengelassen wird. Die Vorrichtung wird zum Verdampfen oder auch bloss zum Erwärmen von verschiedensten Flüssigkeiten verwendet. In erster Linie dient sie jedoch zum Verdampfen von cryogenen Fluida, insbesondere von Stickstoff. Die erzeugten Gase können für vielerlei gewerbliche Anwendungen benutzt werden. Gasförmiger Stickstoff wird vorallem in der Oelbohr-Industrie zur Behandlung von Oelbohrlöchern in grossen Mengen eingesetzt. Die Erfindung ermöglicht eine im Vergleich zu herkömmlichen Anlagen im Aufbau und in der Bedienung einfachere und preiswertere Anlage zur Erzeugung dieses gasförmigen Stickstoffes.

**Ansprüche**

1. Vorrichtung zum Verdampfen eines cryogenen Fludiums mit einem Verbrennungsmotor (1), dessen Abwärme aus dem Kühlwasser und den Abgasen über einen Wasserkreislauf mindestens teilweise an einen Verdampfer (7) abgebbar ist, dadurch gekennzeichnet, dass eine Wasserbremse (14) in Form eines Wasserwirbel-Bremsverzögerers vorhanden ist, die von der Abtriebsachse (6) des Verbrennungsmotors (1) antreibbar ist, und dass diese Wasserbremse (14) zusammen mit mindestens dem Verdampfer (7) einen geschlossenen Kühlkreislauf für das die in der Wasserbremse erzeugte Wärme zu übertragende Wasser bildet.

2. Vorrichtung nach Anspruch 1, dadurch gekennzeichnet, dass die Wasserbremse (14) zusammen mit dem Verdampfer (7), dem Kühlkreislauf des Verbrennungsmotors (1) und dessem Radiator (12) einen geschlossenen Kühlkreislauf für das die Wärme zu übertragende Wasser bildet.

3. Vorrichtung nach Anspruch 1 oder 2, dadurch gekennzeichnet, dass die Wasserbremse (14) zusammen mit mindestens dem Verdampfer (7), dem Kühlkreislauf des Verbrennungsmotors (1), dessem Radiator (12) und einem Abgas-Wärmetauscher (4) einen geschlossenen Kreislauf für das die Wärme zu übertragende Wasser bildet.

4. Vorrichtung nach einem der Ansprüche 1 bis 3, dadurch gekennzeichnet, dass der Wasserbremse (14) ein Ventil (15) vor- oder nachgeschaltet ist, mittels dessen die Wärmeleistung der Wasserbremse (14) regulierbar ist, indem die zeitliche Durchflussmenge an Wasser durch die Wasserbremse (14) variierbar ist.

5. Vorrichtung nach einem der Ansprüche 1 bis 4, dadurch gekennzeichnet, dass der zum Kühlkreislauf des Verbrennungsmotors (1) gehörige Radiator (12) mittels eines als Thermostaten wirkenden Dreiweg-Ventils (11) mit variierbarem Durchfluss-Mengenanteil über eine Parallel-Leitung kurzschliessbar ist.

6. Vorrichtung nach einem der Ansprüche 1 bis 5, dadurch gekennzeichnet, dass der Kühlkreislauf des Verbrennungsmotors (1) mitsamt seinem Radiator (12) parallel zur Wasserbremse (14) geschaltet ist, und dass in Strömungsrichtung des Wassers anschliessend an diese Parallelschaltung erst der Abgas-Wärmetauscher (4), dann der Verdampfer (7), dann ein Expansionsgefäss (9) und schliesslich eine Wasserpumpe (10) in Serie angeordnet sind, wonach der Kreislauf wieder in die vorgenannte Parallelschaltung verzweigt.

7. Vorrichtung nach einem der Ansprüche 1 bis 6, dadurch gekennzeichnet, dass der Verbrennungsmotor (1) ein Dieselaggregat ist und die Wasserbremse (14) direkt an dessen Motorblock angeflanscht ist.

8. Vorrichtung nach einem der Ansprüche 1 bis 7, dadurch gekennzeichnet, dass parallel zur Wasserpumpe (10) ein Oelkühler (16) für die Wasserpumpe (10) im Kreislauf angeordnet ist, derart, dass mindestens ein Teil des hinter der Wasserpumpe (10) austretenden Wassers den Oelkühler (16) durchströmt und vor der Wasserpumpe (10) wieder in den Kreislauf einmündet.

9. Verwendung der Vorrichtung nach einem der Ansprüche 1 bis 8 zum Verdampfen oder zum Erwärmen eines cryogenen Fluidums.

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-2 843 399 (P. RAUTH)<br>* figure 4, claims 1, 4 *<br>--- | 1-3,6,7 | F 24 J   3/00<br>F 22 B   3/06<br>B 01 D   1/00 |
| X | US-A-4 027 631 (E.E. LAVERY)<br>* claims 1, 2, 6; figure *<br>----- | 1-4 | |

TECHNICAL FIELDS
SEARCHED (Int. Cl.4)

B 01 D   1/00
F 22 B   3/00
F 24 J   3/00

The present search report has been drawn up for all claims

| Place of search | Date of completion of the search | Examiner |
|---|---|---|
| BERLIN | 27-04-1988 | KESTEN W.G. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................
& : member of the same patent family, corresponding
    document

EPO FORM 1503 03.82 (P0401)